# NEUE EUROPÄISCHE PATENTSCHRIFT

(11) **EP 2 148 955 B2**
(45) Veröffentlichungstag und Bekanntmachung des Hinweises auf die Entscheidung über den Einspruch: **13.01.2021**
(45) Hinweis auf die Patenterteilung: 29.02.2012
(21) Anmeldenummer: 07728112.9
(22) Anmeldetag: 23.04.2007
(51) Int. Cl.: E01C 23/088, F16F 15/14

(54) **SELBSTFAHRENDE STRAßENBAUMASCHINE**
SELF-PROPELLED ROAD CONSTRUCTION MACHINE
ENGIN DE TRAVAUX PUBLICS AUTOMOTEUR

(43) Veröffentlichungstag der Anmeldung: 03.02.2010
(73) Patentinhaber: Wirtgen GmbH, 53578 Windhagen (DE)
(72) Erfinder: MAHLBERG, Axel, 53773 Hennef (DE); SCHWALBACH, Lothar, 86937 Scheuring (DE); HÄHN, Günter, 53639 Königswinter (DE)
(74) Vertreter: dompatent von Kreisler Selting Werner - Partnerschaft von Patent- und Rechtsanwälten mbB
(86) Internationale Anmeldenummer: PCT/EP2007/053647
(87) Internationale Veröffentlichungsnummer: WO 2008/128562

(56) Entgegenhaltungen:
- EP-A2- 1 666 764
- WO-A-02/01005
- DE-A1- 2 823 894
- DE-A1- 3 021 692
- DE-A1- 3 609 048
- DE-A1- 3 621 143
- DE-A1- 4 328 596
- DE-A1- 19 507 519
- DE-A1-102004 047 471
- DE-A1-102005 004 488
- DE-A1-102005 017 754
- DE-A1-102006 000 813
- DE-C2- 4 205 666
- DE-C2- 4 240 510
- DE-C2- 19 547 698
- DE-U1- 7 826 303
- FR-A1- 2 855 226
- US-A- 5 050 446
- US-A- 6 033 335
- Katalog "CENSTART-V
- Katalog "Voith Turbo - Technische Informationen Hachelatische Kupplungen"
- Dubbel - Taschenbuch für den Maschinenbau", S. G64-G67
- http://de.wikipedia.org/wiki/Schwingungsd% C3%A4mpfer

## Beschreibung

Die Erfindung betrifft eine selbstfahrende Straßenbaumaschine nach dem Oberbegriff des Anspruchs 1.

Derartige Straßenbaumaschinen sind beispielsweise aus der WO02/01005 und DE 10 2005 017 754 A1 bekannt. Die bei solchen Straßenbaumaschinen eingesetzten Verbrennungsmotoren der neueren Generation, insbesondere Dieselmotoren erzeugen aufgrund der Leichtbauweise Drehschwingungen erheblichen Ausmaßes. Dies resultiert unter anderem daraus, dass zunehmend leichte Bauteile, insbesondere leichte Kurbelwellen und Schwungräder verwendet werden und daraus, dass der Verbrennungsvorgang durch geänderte Zündzeitpunkte und Einspritzzeitpunkte aufgrund von Abgasvorschriften andersartig verläuft, wodurch unerwünschte Drehschwingungen im Abtrieb entstehen.

Durch die beachtlichen Drehschwingungen entstehen jedoch Probleme bei nachgelagerten Antriebseinrichtungen im Antriebsstrang, wie beispielsweise bei nachgelagerten Kupplungen und Getrieben. Die Materialermüdung und der Verschleiß können sich erheblich vergrößern, was zu geringeren Standzeiten der Elemente in dem Antriebsstrang führen kann.

Der Erfindung liegt die Aufgabe zugrunde, eine selbstfahrende Straßenbaumaschine zu schaffen, bei der unerwünschte Drehschwingungen im Antriebsstrang auf vorteilhafte Art und Weise gedämpft werden.

Zur Lösung dieser Aufgabe dienen die Merkmale des Anspruchs 1.

Die Erfindung sieht in vorteilhafter Weise vor, dass in dem Antriebsstrang hinter dem Verbrennungsmotor mindestens ein Schwingungstilger angeordnet ist, der von dem Verbrennungsmotor erzeugte Drehschwingung eliminiert oder reduziert.

Die Erfindung ermöglicht es in vorteilhafter Weise, die auf den Verbrennungsmotor zurückgehenden Drehschwingungen und sonstige Drehschwingungen im Antriebsstrang zu dämpfen oder zu eliminieren, wobei mindestens ein Schwingungstilger an der Schaltkupplung zwischen Pumpenverteilergetriebe und einer Riemenscheibe des Zugmittelgetriebes angeordnet ist.

Der Antriebsstrang enthält
- eine Schaltkupplung zum Schalten des Kraftflusses,
- ein Zugmittelgetriebe mit An- und Abtriebmitteln,
- ein Planetengetriebe für die Arbeitswalze, und
- ein Pumpenverteilergetriebe oder
- eine Schaltkupplung zum Schalten des Kraftflusses,
- ein Zugmittelgetriebe mit An- und Abtriebmitteln,
- ein Planetengetriebe für die Arbeitswalze,
- eine elastische Kupplung, und
- ein Pumpenverteilergetriebe.

An der Schaltkupplung ist der mindestens eine Schwingungstilger vorzugsweise abtriebsseitig angeordnet.

Es könnten auch mehrere unterschiedlich abgestimmte Schwingungstilger an einem Element des Antriebsstrangs angeordnet sein.

Vorzugsweise besteht der Schwingungstilger aus einem Elastomer-Metall-Verbundelement. Der Schwingungstilger kann aus einer koaxial zu der jeweiligen Welle, in der die Drehschwingungen des Verbrennungsmotors auftreten, angeordneten Zusatzmasse oder Schwingmasse bestehen, die in Drehschwingungen versetzbar ist, die den Drehschwingungen des Verbrennungsmotors aufgrund von Trägheit entgegenwirken.

Der Schwingungstilger kann aus einer Anschlusseinrichtung zum Anschluss an ein rotierendes Element des Antriebsstranges bestehen, das über ein elastisches Element mit mindestens einer Schwungmasse gekoppelt ist. Diese kann symmetrisch und koaxial zu dem rotierenden Element angeordnet sein.

Bei einem bevorzugten Ausführungsbeispiel ist vorgesehen, dass der Schwingungstilger aus einem ersten inneren Ring mit einer Anschlusseinrichtung, sowie einer ringförmig koaxial zu dem ersten Ring angeordneten Schwungmasse besteht, die mit dem ersten Ring über ein elastisches Element gekoppelt ist. Dabei kann die Schwungmasse aus einem zweiten zu dem ersten Ring konzentrischen oder koaxialen Ring bestehen, wobei zwischen dem ersten Ring und dem zweiten Ring mindestens ein elastisches Element vorgesehen ist.

Das elastische Element besteht vorzugsweise aus einem Elastomer oder aus metallischen Federn, wie z.B. Tellerfedern, Blattfedern oder Schraubenfedern.

Das elastische Element ist vorzugsweise ringförmig angeordnet und kann aus einem elastischen Ring bestehen.

Das elastische Element des Schwingungstilgers an der Schaltkupplung weist vorzugsweise eine Steifigkeit von 35000 Nm/rad bis 45000 Nm/rad, beispielsweise 40000 Nm/rad auf.

Das elastische Element hat ferner einen Dämpfungswert im Bereich zwischen 0,05 bis 0,5.

Das elastische Element des Schwingungstilgers an der Schaltkupplung weist vorzugsweise ein Dämpfungswert von 0,15 bis 0,2, beispielsweise 0,175 auf.

Im folgenden wird unter Bezugnahme auf die Zeichnungen ein Ausführungsbeispiel der Erfindung näher erläutert:

Es zeigen:
- Fig. 1: eine Straßenbaumaschine,
- Fig. 2: ein schematisch dargestellter Antriebsstrang in der Straßenbaumaschine,
- Fig. 3: eine schematische Seitenansicht des Antriebsstranges,
- Fig. 4: eine Schaltkupplung mit abtriebsseitig vorgesehenem Schwingungstilger, und
- Fig. 5: den Schwingungstilger der Kupplung gemäß Fig. 4.

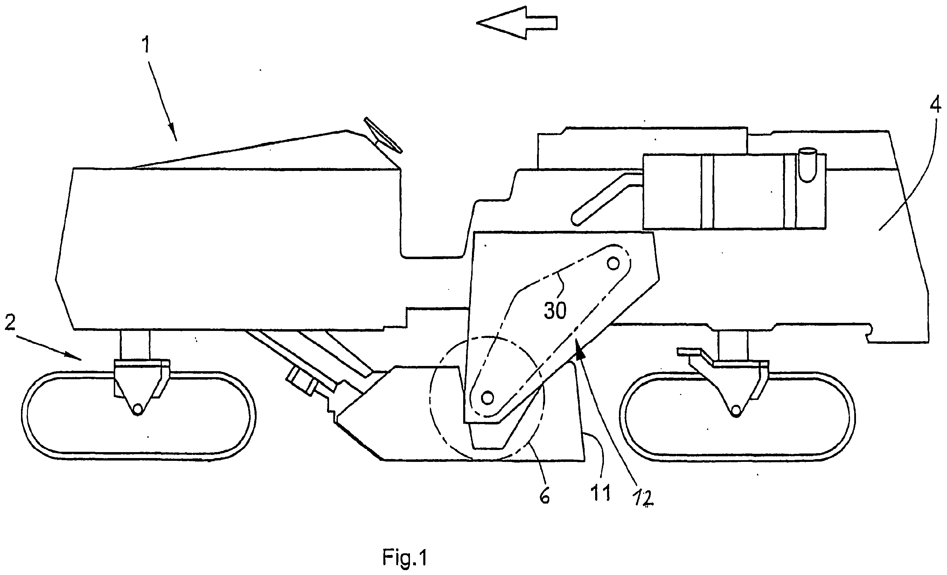

Fig. 1 zeigt eine Baumaschine 1 in Form einer Großfräse mit einem höhenverstellbaren Fahrwerk 2 getragenen Maschinenrahmen 4. An dem Maschinenrahmen 4 ist eine Arbeitswalze 6 mit aus Fräsmeißeln bestehenden Werkzeugen zum Abarbeiten eines Fahrbahnbelages gelagert. Ein Antriebsstrang 8 treibt die Arbeitswalze 6 an. Zu dem Antriebsstrang 8 gehören zumindest ein Antriebsmotor 10, sowie ein mit dem Antriebsmotor 10 gekoppeltes Zugmittelgetriebe 12. Das Zugmittelgetriebe 12 besteht vorzugsweise aus einem Riementrieb mit einer motorseitigen Riemenscheibe 11 und einer walzenseitigen Riemenscheibe 13, die mit mindestens einem Antriebsriemen 30 miteinander gekoppelt sind. Die Antriebsriemen 30 sind vorzugsweise aus Keilriemen zusammengesetzt.

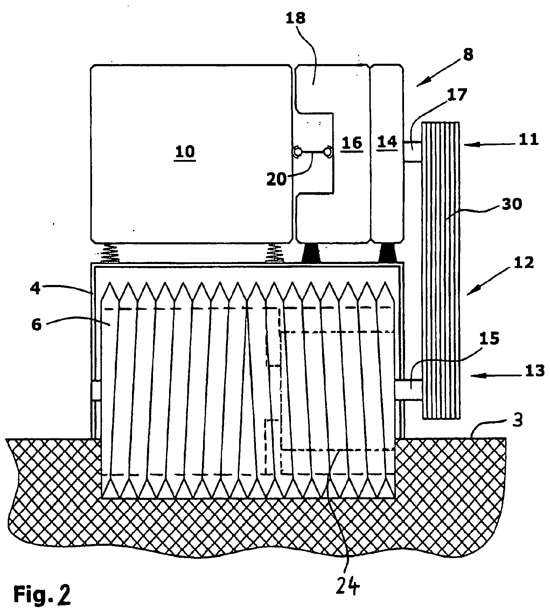

Fig. 2 zeigt schematisch einen Querschnitt durch eine Baumaschine, nämlich insbesondere eine Straßenfräsmaschine, einen Recycler oder einen Stabilisierer mit einer Arbeitswalze 6, die in einem Maschinenrahmen 4 gelagert ist. Alternativ kann die Arbeitswalze 6 in einem Walzengehäuse gelagert sein, das wiederum mit dem Maschinenrahmen fest verbunden ist. Die Arbeitswalze 6 kann auch an einem Maschinenrahmen 4 schwenkbar gelagert sein kann. Der Maschinenrahmen 4 wird von einem Fahrwerk 2 getragen, das in Fig. 1 dargestellt ist. Die Arbeitswalze 6 kann beispielsweise aus einer Fräswalze 6 bestehen. Die Arbeitswalze 6 der Baumaschine wird von einem Antriebsstrang 8 angetrieben, der mindestens folgende Elemente aufweist:

Der Antriebsstrang 8 enthält einen Antriebsmotor 10, der vorzugsweise aus einem Dieselmotor besteht. Der Verbrennungsmotor ist mit einer Elastomerkupplung 20 mit einem Pumpenverteilergetriebe 16 gekoppelt. Die Elastomerkupplung 20 kann auch an anderer Stelle innerhalb des Antriebsstrangs 8 angeordnet sein.

Ein Zugmittelgetriebe 12 für den mechanischen Antrieb der Arbeitswalze 6 weist ein Antriebselement 11, das mit einer Abtriebswelle 17 drehfest gekoppelt ist, und ein Abtriebselement 13, das mit der Antriebswelle 15 der Arbeitswalze 6 drehfest gekoppelt ist. Zwischen der Antriebswelle 15 und der Arbeitswalze 6 kann noch ein Planetengetriebe 24 angeordnet sein.

Das Zugmittelgetriebe 12 ist vorzugsweise ein Riementrieb, wobei die Antriebs- und Abtriebselemente aus Riemenscheiben 11,13 bestehen, über die mehrere Antriebsriemen 30 umlaufen. Alternativ kann das Zugmittelgetriebe 12 auch aus einem Kettenantrieb bestehen, wobei dann die Antriebs- und Abtriebselemente aus Ritzeln bestehen.

Der Antriebsstrang 8 weist ferner eine herkömmliche Einrichtung zum Schalten des Drehmomentes, die im Antriebsstrang 8 zwischen dem Antriebsmotor 10 und der Arbeitswalze 6 angeordnet ist und vorzugsweise aus einer Schaltkupplung 14, z.B. des Typs Planox, besteht.

Der Antriebsstrang 8 enthält des weiteren eine mit dem Antriebsmotor 10 gekoppelte Einrichtung 16 zum Antrieb von hydraulischen Aggregaten, z.B. Hydraulikpumpen 18.

Fig. 2 zeigt den Antriebsstrang 8 bestehend aus dem Antriebsmotor 10, der mit einem Pumpenverteilergetriebe 16 gekoppelt sein kann, an dem verschiedene Hydropumpen 18 für unterschiedliche Funktionen der Baumaschine 1 angeschlossen sein können.

Der Antriebsmotor 10 bzw. das Pumpenverteilergetriebe 16 kann über eine Kupplung 14 mit der motorseitigen Riemenscheibe 11 gekoppelt sein. Die Arbeitswalze 6 am Maschinenrahmens 4 gelagert. In der Arbeitswalze 6 kann ein Untersetzungsgetriebe, z.B. ein Planetengetriebe 24 angeordnet sein, das die Drehzahl der walzenseitigen Riemenscheibe 13 beispielsweise im Verhältnis 1 : 20 untersetzt. Damit kann die Arbeitswalze 6 mit einer Arbeitsdrehzahl von ca. 100 U/min arbeiten, wenn der Verbrennungsmotor 10 mit einer Drehzahl von z.B. 2000 U/min betrieben wird und das Zugmittelgetriebe 12 ein Übersetzungsverhältnis von 1 : 1 hat.

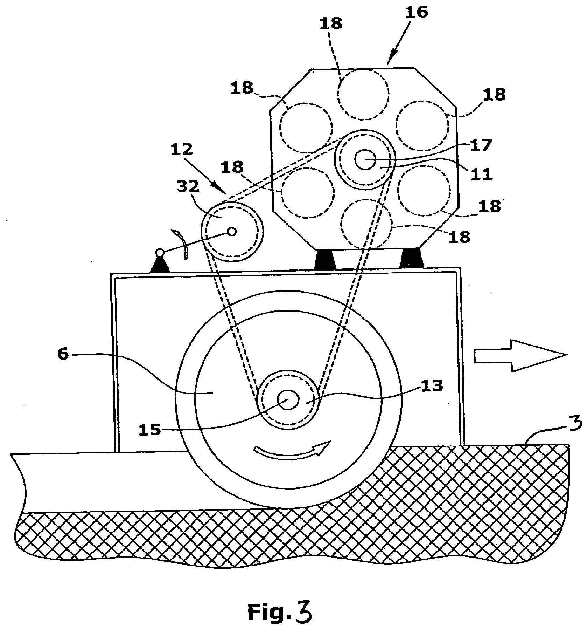

Wie aus Fig. 3 ersichtlich, weist das Pumpenverteilergetriebe 16 beispielsweise sechs Hydraulikpumpen 18 auf, die kreisförmig und mit beispielsweise gleichem gegenseitigen Abstand um die Abtriebswelle 17 des Antriebsstrangs 8 angeordnet sind. In Fig. 3 ist eine Spannrolle 32 für das Zugmittelgetriebe 12 dargestellt.

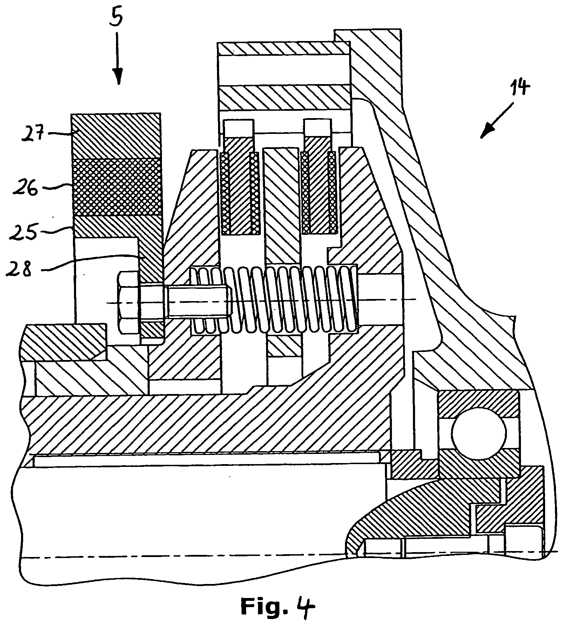

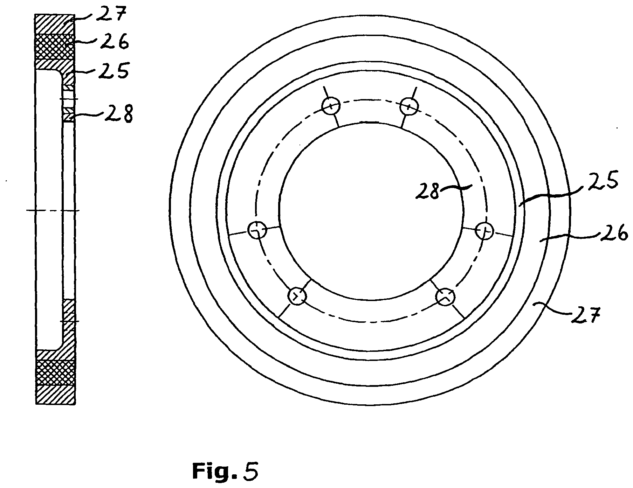

Fig. 4 zeigt eine herkömmliche, vorzugsweise hydraulisch betätigte Schaltkupplung 14, bei der abtriebsseitig ein Schwingungstilger 5 angekoppelt ist, der in Fig. 5 vollständig im Querschnitt und in einer Draufsicht dargestellt ist.

Der Schwingungstilger 5 besteht aus mehreren konzentrischen Ringen, wobei ein erster innerer Ring 25 eine Anschlusseinrichtung 28, z.B., einen Anschlussflansch, aufweist. Dieser erste Ring 25 ist umgeben von einem elastischen Element 26, das in dem Ausführungsbeispiel den ersten Ring vollständig peripher umgibt.

Der konzentrisch und koaxial zu dem ersten Ring 25 verlaufende zweite Ring 27 dient als Schwungmasse und ist seinerseits fest mit dem elastischen Element 26 peripher verbunden.

Die Fig. 5 zeigt eine radiale Anordnung des ersten inneren Rings 25 des elastischen Elementes 26 und des äußeren zweiten Rings 27. Es versteht sich allerdings, dass auch eine axiale Anordnung dieser Ringe 25, 26, 27 möglich ist. Desweiteren muss die Schwungmasse nicht zwangsläufig ringförmig sein, sondern kann aus mehreren symmetrisch um die kraftübertragende Welle angeordnete einzelne Schwungmassen bestehen. Desweiteren kann der erste Ring 25 zugleich die Anschlusseinrichtung 28 bilden. Schließlich kann anstelle des ersten Ringes 25 eine nicht zwangsläufig ringförmige Anschlusseinrichtung 28 vorgesehen sein, die zum Ankoppeln an eine kraftübertragende Welle dient und die mit dem elastischen Element 26 drehfest verbunden ist. An dem elastischen Element ist dann mit radialem Abstand nach außen mindestens eine Schwungmasse drehfest verbunden.

Das elastische Element 26 kann aus einem Elastomer oder auch aus metallischen Federn, z.B. Tellerfedern, Blattfedern oder Schraubenfedern, bestehen, die in Richtung der Drehschwingungen wirken.

Beim Einsatz des elastischen Elementes 26 in einer Schaltkupplung 14 wird eine Steifigkeit von 35000 Nm/rad bis 45000 Nm/rad bevorzugt, wobei sich ein Wert von 40000 Nm/rad als besonders geeignet erwiesen hat. Der relative Dämpfungswert beträgt dabei zwischen 0,15 und 0,2, vorzugsweise 0,175.

Die Schwungmasse des Schwingungstilgers 5 wirkt aufgrund seiner Trägheit den Drehschwingungen des Verbrennungsmotors 10 entgegen und dämpft oder eliminiert diese.

## Patentansprüche

1. Selbstfahrende Straßenbaumaschine (1), mit
- einer an einem Maschinenrahmen (4) gelagerten Arbeitswalze (6) zum Bearbeiten einer Boden- oder Verkehrsfläche (3),
- einem Verbrennungsmotor (10) für den Antrieb der Arbeitswalze (6), und
- einem Antriebsstrang (8) zwischen dem Verbrennungsmotor (10) und der Arbeitswalze (6), wobei der Antriebsstrang (8)
- eine Schaltkupplung (14),
- ein Zugmittelgetriebe (12) mit An- und Abtriebmitteln (11,13),
- ein Planetengetriebe (24) für die Arbeitswalze, und
- ein Pumpenverteilergetriebe (16) enthält,
**dadurch gekennzeichnet,dass**
in dem Antriebsstrang (8) hinter dem Verbrennungsmotor (10) mindestens ein Schwingungstilger an der Schaltkupplung (14) zwischen Pumpenverteilergetriebe (16) und einer Riemenscheibe (11,13) des Zugmittelgetriebes (12) angeordnet ist, wobei der mindestens eine Schwingungstilger von dem Verbrennungsmotor (10) erzeugte Drehschwingungen eliminiert oder reduziert.

2. Straßenbaumaschine nach Anspruch 1, **dadurch gekennzeichnet, dass** der mindestens eine Schwingungstilger an der Schaltkupplung (14) abtriebsseitig angeordnet ist.

3. Straßenbaumaschine nach Anspruch 1 oder 2, **dadurch gekennzeichnet, dass** der Schwingungstilger aus einer koaxial zu der jeweiligen Drehschwingungsachse, in der die Drehschwingungen des Verbrennungsmotors (10) auftreten, radial außen angeordneten Zusatzmasse besteht, die in Drehschwingungen versetzbar ist, die den Drehschwingungen des Verbrennungsmotors (10) entgegenwirken.

4. Straßenbaumaschine nach einem der Ansprüche 1 bis 3, **dadurch gekennzeichnet, dass** der Schwingungstilger aus einer Anschlusseinrichtung (28) zum Anschluss an ein rotierendes Element der Schaltkupplung (14) besteht, das über ein elastisches Element (26) mit mindestens einer Schwungmasse gekoppelt ist.

5. Straßenbaumaschine nach Anspruch 4, **dadurch gekennzeichnet, dass** das elastische Element (26) des Schwingungstilgers an der Schaltkupplung (14) eine Steifigkeit von 35000 Nm/rad bis 45000 Nm/rad aufweist.

6. Straßenbaumaschine nach Anspruch 4 oder 5, **dadurch gekennzeichnet, dass** das elastische Element (26) einen relativen Dämpfungswert von 0,05 bis 0,5 aufweist.

7. Straßenbaumaschine nach einem der Ansprüche 4 bis 6, **dadurch gekennzeichnet, dass** das elastische Element des Schwingungstilgers an der Schaltkupplung (14) einen relativen Dämpfungswert von 0,15 bis 0,2, vorzugsweise 0,175 aufweist.

## Claims

1. An automotive road construction machine (1), comprising
- a working drum (6) mounted at a machine frame (4) for working a ground surface or traffic surface (3),
- a combustion engine (10) for driving the working drum (6), and
- a drive train (8) between the combustion engine (10) and the working drum (6), said drive train (8) including
- a clutch (14),
- a traction mechanism (12) with drive and output elements (11,13),
- a planetary gear (24) for the working drum, and
- a pump transfer case (16),
**characterized in that**
at least one vibration absorber is arranged in the drive train (8) downstream of the combustion engine (10) at the clutch (14) between the pump transfer case (16) and a pulley (11, 13) of the traction mechanism (12), with the at least one vibration absorber eliminating or reducing rotary vibrations generated by the combustion engine (10).

2. The road construction machine in accordance with claim 1, **characterized in that** the at least one vibration absorber is arranged at the clutch (14) on the output side of the same.

3. The road construction machine in accordance with claim 1 or 2, **characterized in that** the vibration absorber consists of an additional mass arranged coaxially to that particular axis of rotary vibration in which the rotary vibrations of the combustion engine (10) are occurring, and radially towards the outside, with the said additional mass capable of being excited to rotary vibrations which counteract the rotary vibrations of the combustion engine (10).

4. The road construction machine in accordance with any one of claims 1 to 3, **characterized in that** the vibration absorber consists of a connecting device (28) for connection to a rotating element of the clutch (14), which is coupled to at least one flywheel mass via an elastic element (26).

5. The road construction machine in accordance with claim 4, **characterized in that** the elastic element (26) of the vibration absorber at the clutch (14) shows a rigidity of 35000 Nm/rad to 45000 Nm/rad.

6. The road construction machine in accordance with claim 4 or 5, **characterized in that** the elastic element (26) has a relative damping value of 0.05 to 0.5.

7. The road construction machine in accordance with any one of claims 4 to 6, **characterized in that** the elastic element of the vibration absorber at the clutch (14) shows a relative damping value of 0.15 to 0.2, preferably 0.175.

## Revendications

1. Engin de travaux routiers automoteur (1), comportant
- un rouleau de travail (6) monté sur un châssis d'engin (4) et destiné à travailler une surface de sol ou de chaussée (3),
- un moteur à combustion (10) pour l'entraînement du rouleau de travail (6), et
- une barre d'entraînement (8) entre le moteur à combustion (10) et le rouleau de travail (6), la barre d'entraînement (8) contenant
- un embrayage (14),
- une transmission de traction (12) dotée de moyens menant et mené (11, 13),
- un engrenage planétaire (24) destiné au rouleau de travail, et
- une boîte de distribution de pompe (16),
**caractérisé en ce que**
au moins un amortisseur d'oscillations, qui supprime ou réduit les vibrations de torsion générées par le moteur à combustion (10), est disposé dans la barre d'entraînement (8) en arrière du moteur à combustion (10) au niveau de l'embrayage (14) entre la boîte de distribution de pompe (16) et une poulie (11, 13) de la transmission de traction (12) .

2. Engin de travaux routiers selon la revendication 1, **caractérisé en ce que** l'au moins un amortisseur d'oscillations est disposé au niveau de l'embrayage (14) du côté sortie.

3. Engin de travaux routiers selon la revendication 1 ou 2, **caractérisé en ce que** l'amortisseur d'oscillations est constitué d'une masse additionnelle qui est disposée radialement vers l'extérieur coaxialement à l'axe correspondant des vibrations de torsion dans lequel sont générées les vibrations de torsion du moteur à combustion (10) et qui peut être soumis à des vibrations de torsion qui s'opposent aux vibrations de torsion du moteur à combustion (10).

4. Engin de travaux routiers selon l'une des revendications 1 à 3, **caractérisé en ce que** l'amortisseur d'oscillations est constitué d'un mécanisme de raccordement (28) pour le raccordement à un élément tournant de l'embrayage (14) qui est couplé à au moins une masse d'équilibrage par le biais d'un élément élastique (26).

5. Engin de travaux routiers selon la revendication 4, **caractérisé en ce que** l'élément élastique (26) dudit amortisseur d'oscillations au niveau de l'embrayage (14) présente une rigidité de 35 000 Nm/rad à 45 000 Nm/rad.

6. Engin de travaux routiers selon la revendication 4 ou 5, **caractérisé en ce que** l'élément élastique (26) a une valeur d'amortissement relative de 0,05 à 0,5.

7. Engin de travaux routiers selon l'une des revendications 4 à 6, **caractérisé en ce que** l'élément élastique dudit amortisseur d'oscillations au niveau de l'embrayage (14) a une valeur d'amortissement relative de 0,15 à 0,2, de préférence 0,175.
